Europäisches Patentamt

European Patent Office

Office européen des brevets

(19)

(11) Veröffentlichungsnummer : **0 056 032**
**B1**

(12) # EUROPÄISCHE PATENTSCHRIFT

(45) Veröffentlichungstag der Patentschrift :
26.03.86

(51) Int. Cl.⁴ : **B 60 K   9/04**, F 16 H 47/04

(21) Anmeldenummer : **81901810.2**

(22) Anmeldetag : **29.05.81**

(86) Internationale Anmeldenummer :
**PCT/EP 81/00059**

(87) Internationale Veröffentlichungsnummer :
**WO/8200270 (04.02.82 Gazette 82/04)**

(54) **ANTRIEBSAGGREGAT MIT EINER ANTRIEBSMASCHINE UND EINEM SCHWUNGRAD.**

Verbunden mit 81104124.3 (europäische Anmelde-nummer) durch Entscheidung vom 25.03.83.

(30) Priorität : **10.07.80 DE 3026219**

(43) Veröffentlichungstag der Anmeldung :
**21.07.82 Patentblatt 82/29**

(45) Bekanntmachung des Hinweises auf die Patenter-teilung : **26.03.86 Patentblatt 86/13**

(84) Benannte Vertragsstaaten :
**AT BE CH DE FR GB IT LI NL SE**

(56) Entgegenhaltungen :
**DE-A- 2 444 564**
**DE-A- 2 710 532**
**DE-A- 2 810 086**
**FR-A- 2 365 066**
**GB-A- 2 016 098**
**US-A- 3 870 116**

(73) Patentinhaber : **J.M. Voith GmbH**
**Postfach 1940 St. Pöltener Strasse 43**
**D-7920 Heidenheim (DE)**

(72) Erfinder : **ELSNER, Ernst**
**Danziger Strasse 7**
**D-7922 Herbrechtingen (DE)**

Jouve, 18, rue St-Denis, 75001 Paris, France

## Beschreibung

Die Erfindung betrifft ein Antriebsaggregat, insbesondere für Fahrzeuge, mit einer Antriebsmaschine und einem Schwungrad sowie mit den weiteren im Oberbegriff des Anspruchs 1 genannten Merkmalen.

Ein Antriebsaggregat dieser Art ist bekannt aus der DE-A-28 10 086, Figur 3. Darin ist das dritte Planetengetriebeglied dauernd mit der Abtriebswelle verbunden. Außerdem ist dort das Schwungrad sowohl im ersten Betriebsbereich (Anfahren) als auch im zweiten Betriebsbereich über eine Schaltkupplung (24) an die Antriebsmaschine gekoppelt (siehe hierzu die in der DE-A- genannte ältere DE-A-26 41 886). Die genannte Schaltkupplung 24 wird nur geöffnet, wenn die Antriebsmaschine über das stufenlose Getriebe das Schwungrad aufladen soll. Eine weitere Besonderheit des bekannten Antriebsaggregates besteht im folgenden : Wenn die Antriebsmaschine bei der sogenannten Konstantfahrt durch die Schaltstellung m der Kupplung 24 direkt an die Abtriebswelle gekoppelt ist, muß das Schwungrad mittels einer zusätzlichen Schaltkupplung (37) vom Antriebsaggregat gelöst werden, sonst wäre auch das Schwungrad direkt an die Abtriebswelle gekoppelt.

Das stufenlose Getriebe des bekannten Antriebsaggregats umfaßt zwei einzelne hydrostatische Einheiten. Es ist angestrebt, den Anteil der hydrostatischen Leistung an der gesamten übertragenen Leistung so klein wie möglich zu halten, um hierdurch den Wirkungsgrad des Antriebsaggregats zu verbessern.

Im ersten Betriebsbereich (Anfahren) wird die Summe der vom Motor und vom Schwungrad abgegebenen Leistung teils mechanisch über das Planetengetriebe, teils hydrostatisch über das stufenlose Getriebe auf die Abtriebswelle übertragen. Dabei ist der hydrostatische Anteil im Anfahrpunkt gleich 100 %. Während des Anfahrens verringert sich die Drehzahl der einen Hydrostatik-Einheit (14) bis zum Wert Null, womit auch der hydrostatische Leistungs-Anteil zu Null wird. In diesem Betriebspunkt findet das Umschalten in den zweiten Betriebsbereich statt, wobei der Leistungsfluß durch das hydrostatische Getriebe umgekehrt wird und der hydrostatische Leistungsanteil allmählich wieder zunimmt. Nach wie vor sind der Motor und das Schwungrad aneinander gekoppelt, so daß der hydrostatische Leistungsanteil teils vom Motor und teils vom Schwungrad stammt. Ungünstig ist somit, daß in dem genannten zweiten Betriebsbereich ein mit zunehmender Abtriebsdrehzahl immer größer werdender Anteil der vom Motor und Schwungrad gemeinsam abgegebenen Leistung durch das hydrostatische Getriebe übertragen wird, und daß erst am Ende dieses zweiten Betriebsbereiches der Motor unmittelbar mechanisch an die Abtriebswelle gekoppelt werden kann (wie schon erwähnt unter vollkommener Abkoppelung des Schwungrades).

Aus der DE-A-27 10 532 ist ein anderes Antriebsaggregat bekannt, bei dem nur im ersten Betriebsbereich (Anfahren) einteils vom Motor teils vom Schwungrad stammender Leistungsanteil durch das hydrostatische Getriebe fließt. Im zweiten Betriebsbereich wird nur noch die vom Schwungrad stammende Leistung durch das hydrostatische Getriebe geführt, wie nachfolgend im einzelnen erläutert wird :

In Fig. 1 der DE-A-27 10 532 ist die Antriebsmaschine 10 koaxial zum stufenlos variablen Getriebe 15 angeordnet und hierzu seitlich parallel einerseits das Schwungrad 17 und andererseits die Abtriebswelle 31. Der eine Getriebeanschluß des variablen Getriebes 15 ist an die Antriebsmaschine 10 und der andere über Zahnräder 35, 40, 39 an das Schwungrad oder an die Abtriebswelle kuppelbar. Die im Anspruch 1 genannten vier Schaltkupplungen sind in Fig. 1 der DE-A- durch die folgenden Getriebeteile gebildet : 37 und 42 ; 42 und 39 ; 33 und 44 ; 35 und 44. Unter anderen sind, wie schon erwähnt, die folgenden Betriebszustände möglich :

1. Nur im Anfahr-Betriebsbereich (die Schaltkupplungen 37/42 und 35/44 sind eingerückt) wird die Summe der Leistungen aus der Antriebsmaschine und aus dem Schwungrad durch das stufenlos variable Getriebe übertragen.

2. Im daran anschließenden zweiten Betriebsbereich (Schaltkupplungen 39/42 und 33/44 eingerückt) wird nur noch die vom Schwungrad abgegebene Leistung über das stufenlos variable Getriebe geführt ; die Leistung der Antriebsmaschine wird dagegen direkt, also nahezu verlustfrei auf die Abtriebswelle übertragen.

Gemäß Seite 29 Absatz 2 der DE-A- können verschiedene Arten stufenlos variabler Getriebe verwendet werden. Bevorzugt wird jedoch ein leistungsteilendes hydrostatisches Getriebe, beschrieben in der Zeitschrift « Ölhydraulik und Pneumatik » 1971, Seiten 385 bis 391. Solche leistungsverzweigende Getriebe haben gegenüber den anderen stufenlos variablen Getrieben den Vorteil, daß ein Teil der Leistung zwecks Verbesserung des Wirkungsgrades rein mechanisch übertragen wird. Das heißt, der hydraulische Leistungsanteil des stufenlos variablen Getriebes ist, abgesehen vom unmittelbaren Anfahrzustand, verhältnismäßig niedrig.

Wegen des rotierenden Gehäuses sind diese leistungsteilenden hydrostatischen Getriebe jedoch verhältnismäßig teuer. Vielfach stört auch die große Baulänge. Ein weiterer Nachteil besteht im folgenden : Durch die mechanische Kopplung der beiden hydrostatischen Einheiten über das gemeinsame, rotierende Gehäuse ist es nicht möglich, jede der beiden Einheiten für sich allein auf maximale Drehzahl oder auf minimales spezifisches Volumen zu optimieren.

Bei dem bekannten Antriebsaggregat ist vorgesehen, daß das Umschalten zwischen dem Anfahr- Betriebsbereich und dem anderen anschließenden Betriebsbereich dann stattfindet, wenn das hydrostatische Getriebe ein oberhalb von 1 liegendes Drehzahlverhältnis erreicht hat. Dadurch kann der Bereich, in dem der hydraulische Leistungsanteil des leistungsteilenden hydrostatischen Getriebes verhältnismäßig niedrig ist, noch vergrößert werden. Zugleich können gemäß Seite 33 der DE-A- die Drehzahlverhältnisse der wesentlichen Antriebsteile durch entsprechende Bemessung der Zahnräder 33, 35, 37 bis 40 derart an das Übersetzungsverhältnis des hydrostatischen Getriebes im Umschaltpunkt angepaßt werden, daß ein Umschalten vom Anfahrbetriebsbereich in den daran anschließenden Betriebsbereich (oder umgekehrt) ohne Relativdrehzahlen an den Schaltkupplungen erfolgen kann. Ein Nachteil ist jedoch, daß hierzu eine verhältnismäßig große Anzahl von Zahnradgetrieben (in der Regel 3 oder 4) erforderlich sind. Außerdem ist es nicht ohne weiteres möglich, den Verlauf der Leistungsaufteilung zu verändern. Dieser Verlauf hängt, wie schon erwähnt, vom Übersetzungsverhältnis des hydrostatischen Getriebes im Umschaltpunkt ab. Um das hydrostatische Getriebe möglichst gut auszunutzen, ist das vorgenannte Übersetzungsverhältnis in etwa gleich dem maximalen Übersetzungsverhältnis. Eine Änderung des Verlaufes der Leistungsaufteilung bedingt daher in der Regel eine Veränderung des maximalen Fördervolumens in dem hydrostatischen Getriebe. Hierbei ist gleichzeitig eine Änderung der Übersetzungsverhältnisse der Zahnradgetriebe erforderlich.

Der Erfindung liegt die Aufgabe zugrunde, ein Antriebsaggregat mit Antriebsmaschine, Schwungrad und stufenlosem Getriebe zu schaffen, das die folgenden Eigenschaften in sich vereinigt :

1. Nur im Anfahrbereich soll die Summe aus Motorleistung und Schwungradleistung über das stufenlose Getriebe fließen ; d. h. schon im zweiten Betriebsbereich soll der Motor direkt an die Abtriebswelle kuppelbar sein.

2. Die Verwendung eines einfachen dreigliedrigen Planetengetriebes und eines in zwei einzelne Getriebeeinheiten aufgeteilten stufenlosen Getriebes soll beibehalten werden.

3. Der Verlauf der Leistungsaufteilung soll mit möglichst geringem Aufwand veränderbar sein.

Zur Lösung dieser Aufgabe wurden zwei verschiedene Merkmalskombinationen gefunden (Patentansprüche 1 und 2). Verglichen mit der DE-A-28 10 086 gelingt es durch die Erfindung, den Wirkungsgrad des Aggregats im zweiten Betriebsbereich wesentlich zu verbessern ; denn hier ist der Motor direkt an die Abtriebswelle gekoppelt, während parallel hierzu das Schwungrad seine Leistung noch über das stufenlose Getriebe an die Abtriebswelle abgeben kann (Einzelheiten werden weiter unten erläutert).

Verglichen mit der DE-A-27 10 532 wird durch die Erfindung folgendes erreicht :

a. Auf die Leistungsverzweigung im stufenlos variablen Getriebe kann verzichtet werden ; d. h. es können einfache stufenlos regelbare Getriebeelemente, die im Falle hydrostatischer Einheiten einzeln anbaubar sind, verwendet werden. Stufenlos regelbare Getriebeelemente dieser Art sind, auch für höhere Leistungen, ohne Schwierigkeiten im Handel erhältlich.

b. Das gesamte Getriebe kann sehr kompakt ausgeführt werden, weil außer dem Planetengetriebe in der Regel nur wenige Zahnräder erforderlich sind.

Bei fast allen Ausführungsformen der Erfindung kann das stufenlose Getriebe in zwei Einzelmaschinen aufgelöst werden, die beide bis zu ihrer maximal zulässigen Drehzahl betrieben werden können. Ihre Baugröße kann also sehr klein gehalten werden. Die Anordnung der beiden Einheiten des stufenlosen Getriebes ist weitgehend beliebig. Man kann sie z. B. nebeneinander anordnen, wodurch sich für das gesamte Antriebsaggregat eine kurze Baulänge ergibt. Unter Umständen können die Einheiten von außen an ein Getriebegehäuse angeflanscht werden. Dadurch sind sie im Falle einer Reparatur einfach austauschbar.

Falls es erwünscht ist, den Verlauf der Leistungsaufteilung zu verändern, so ist hierzu lediglich eine Änderung der Übersetzung des Differentialgetriebes erforderlich. Es ist ein besonderer Vorteil der Erfindung, daß hierbei das stufenlos variable Getriebe nicht verändert zu werden braucht.

Wie bei dem bekannten Antriebsaggregat (DE-A-27 10 532) können für das stufenlos variable Getriebe verschiedene bekannte Getriebebauarten eingesetzt werden. Nunmehr wird aber durch das zusätzlich vorgesehene Planetengetriebe erreicht, daß bei allen Getriebebauarten eine Leistungsteilung stattfindet und der Wirkungsgrad hierdurch angehoben wird.

Durch geringfügige Abwandlung in der Getriebe-Anordnung können unterschiedliche Kennlinien-Verläufe erzielt werden. So kann man durch die Ausführung nach Anspruch 2 erreichen, daß die Kennlinie für den Leistungsanteil des stufenlos variablen Getriebes im Anfahr-Betriebsbereich hyperbelartig abfällt und im anschließenden Betriebsbereich linear ansteigt.

Dagegen kann durch die Ausführung nach Anspruch 1 erreicht werden, daß die vorgenannte Kennlinie im Anfahr-Betriebsbereich linear abfällt und daran anschließend hyperbelartig ansteigt. Diese Ausführung wird man im allgemeinen bevorzugen, weil hier der Bereich niedrigen Leistungsanteils im stufenlosen Getriebe größer ist.

Mit den im Anspruch 3 angegebenen Merkmalen wird erreicht, daß in dem Planetengetriebe das mit der höchsten Drehzahl umlaufende Getriebeglied das Sonnenrad ist, also dasjenige Getriebeglied, welches die höchste Drehzahl am ehesten verträgt.

Ein wichtiger weiterführender Gedanke der Erfindung ist im Anspruch 4 angegeben. Durch diese Maßnahme wird erreicht, daß in dem stufenlos variablen Getriebe keine der beiden Getriebeeinheiten reversierbar, d. h. für beide Drehrichtungen ausgebildet sein muß. Dadurch wird z. B. die Verwendung eines mechanischen stufenlosen Getriebes möglich, ohne daß die oben beschriebenen Vorteile verloren gehen. Hierbei muß man unter Umständen in Kauf nehmen, daß beim Umschalten zwischen dem Anfahr- und dem folgenden Betriebsbereich die Drehzahl der Antriebsmaschine vom Getriebe her verändert wird. Dieser Nachteil könnte, wenn dies erforderlich erscheint, dadurch beseitigt werden, daß man — wie an sich bekannt — zwischen der Abtriebswelle einerseits und dem Zwischengetriebeglied und/oder der Antriebsmaschine andererseits noch ein Anpaßgetriebe anordnet.

Ausführungsbeispiele der Erfindung sind nachfolgend anhand der Zeichnung beschrieben. Darin zeigt :

Figur 1 ein Antriebsaggregat in schematischer Darstellung ;

Figur 2 eine Abwandlung des Antriebsaggregates von Fig. 1 ;

Figur 3 eine Abwandlung des Antriebsaggregats von Fig. 2 ;

Figur 4 ein Diagramm mit einer Kennlinie des Antriebsaggregats nach Fig. 3 ;

Figur 5 ein weiteres Ausführungsbeispiel der Erfindung.

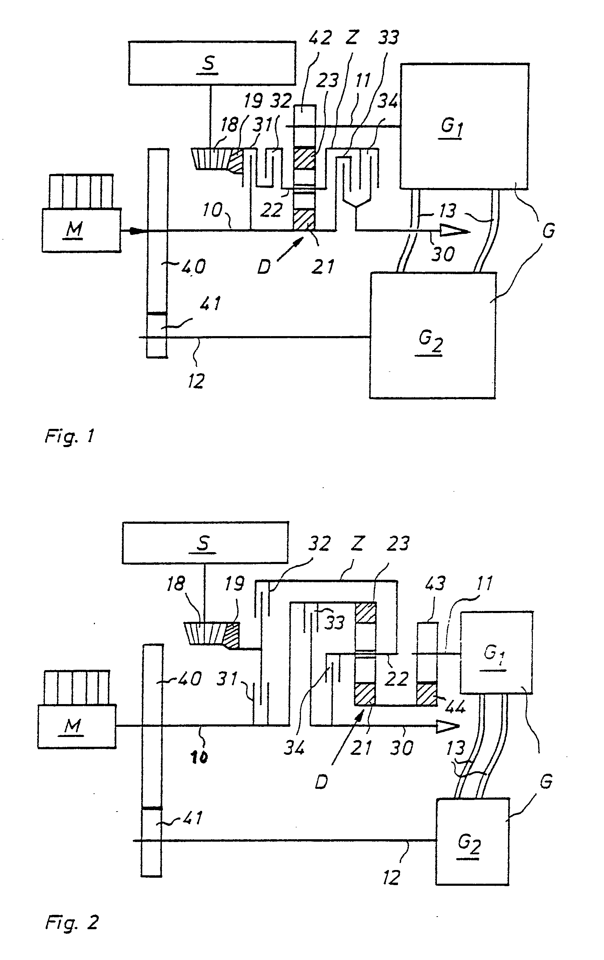

In den Figuren 1, 2 und 3 sind die folgenden Teile übereinstimmend wie folgt bezeichnet :

M Antriebsmaschine, ausgebildet als Brennkraftmotor mit einer Motorwelle 10 ;

S Schwungrad mit einem Untersetzungs-Kegelgetriebe, das ein an das Schwungrad gekoppeltes Ritzel 18 und ein Tellerrad 19 aufweist ;

G Stufenlos variables Getriebe, umfassend zwei einzeln im Antriebsaggregat angeordnete Hydrostatik-Einheiten $G_1$ und $G_2$, die beide wechselweise als Pumpe und als Motor arbeiten können, je eine Welle 11 bzw. 12 als Getriebeanschluß aufweisen und mittels Hydraulikleitungen 13 verbunden sind ;

D Planetengetriebe mit Sonnenrad 21, Planetenträger 22 und Hohlrad 23 ;

Z Zwischengetriebeglied, das als drehbare Trommel ausgebildet und an den Planetenträger 22 gekoppelt ist ;

30 Abtriebswelle ;

31 Schaltkupplung zwischen der Motorwelle 10 und dem Tellerrad 19, das zum Untersetzungsgetriebe des Schwungrades S gehört ;

32 Schaltkupplung zwischen dem Tellerrad 19 (Schwungrad S) und dem Zwischengetriebeglied Z ;

33 Schaltkupplung zwischen der Motorwelle 10 und der Abtriebswelle 30 ;

34 Schaltkupplung zwischen dem Zwischengetriebeglied Z und der Abtriebswelle 30.

Wie allgemein gekannt, kann bei Bedarf jede Schaltkupplung ersetzt werden durch eine Baueinheit umfassend einen Planetenradsatz und eine Bremse zum Stillsetzen des Hohlrades oder eines der anderen Glieder des Planetenradsatzes.

In Fig. 1 ist die Motorwelle 10 über ein Zahnradpaar 40/41 mit der Hydrostatik-Einheit $G_2$ verbunden. Außerdem ruht auf der Motorwelle 10 das Sonnenrad 21 des Planetengetriebes D ; das Hohlrad 23 kämmt dagegen auf seiner Außenseite mit einem Zahnrad 42, das auf der Welle 11 der Hydrostatik-Einheit $G_1$ ruht.

In Fig. 2 ist die Motorwelle 10 einerseits ebenfalls über ein Zahnradpaar 40/41 mit der Hydrostatik-Einheit $G_2$ verbunden, andererseits aber nunmehr mit dem Hohlrad 23. Die Hydrostatik-Einheit $G_1$ ist hier über ein Zahnradpaar 43/44 mit dem Sonnenrad 21 verbunden.

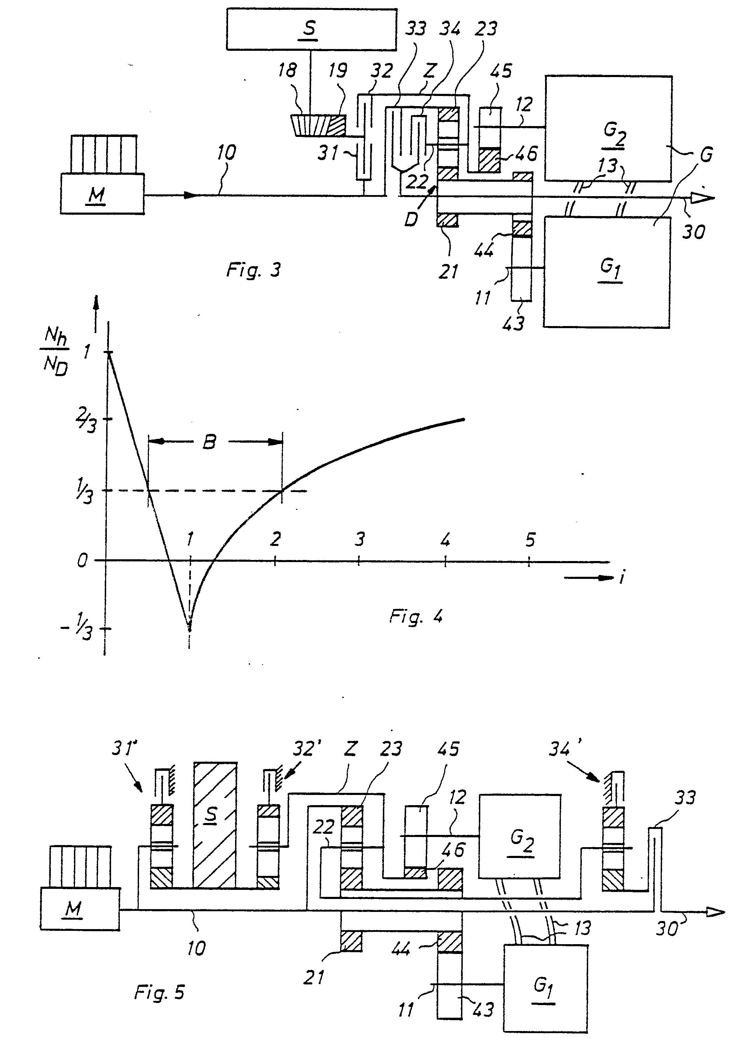

Letzteres trifft auch zu für die Fig. 3. Hier ist aber die Hydrostatik-Einheit $G_2$ über ein Zahnradpaar 45/46 mit dem Planetenträger 22 und damit auch mit dem Zwischengetriebeglied Z verbunden. Das Hohlrad 23 ist wieder mit der Motorwelle 10 gekoppelt.

In Figur 1 sind die Getriebeteile 19, 31, 32, 21, 22, 23, Z, 33 und 34 im Längsschnitt dargestellt, und zwar jeweils nur die oberhalb der Wellen 10 und 30 befindliche Hälfte, während die untere Hälfte dieser Getriebeteile (der besseren Übersicht wegen) weggelassen ist. Eine ähnliche Darstellung wurde auch in den Figuren 2, 3 und 5 gewählt.

Die Wirkung der drei Ausführungsformen nach Figur 1, 2 und 3 ist sehr ähnlich. Sie wird nachfolgend anhand der Fig. 3 und 4 erläutert. In Fig. 4 ist aufgetragen die sogenannte Leistungsaufteilung $N_h/N_D$ (das ist das Verhältnis der hydraulischen Leistung $N_h$ zur gesamten durch das Planetengetriebe D übertragenen Leistung $N_D$) über der Gesamt-Getriebe-Übersetzung i (das ist das Verhältnis $n_{30}/n_{19}$ der Drehzahlen der Abtriebswelle 30 und des Tellerrades 19).

Im Anfahr-Betriebsbereich sind die Schaltkupplungen 31 und 34 geschlossen und die Schaltkupplungen 32 und 33 geöffnet. Dadurch werden Motor- und Schwungrad-Leistung im Punkt 50 addiert und dem Hohlrad 23 des Planetengetriebes D zugeführt. Von hier aus wird die Leistung teils über die Getriebeteile 22, 46, 45, 12, $G_2$, $G_1$, 43, 44, 21, 22 und 34 und teils vom Planetenträger 22 über die Schaltkupplung 34 direkt auf die Abtriebswelle 30 übertragen. Dabei ist die Leistungsaufteilung $N_h/N_D$ im Anfahrpunkt gleich 1 ; hier ist die Übersetzung des hydrostatischen Getriebes gleich Null. Die Leistungsaufteilung fällt dann rasch linear ab. Beim Wert $N_h/N_D$ = 0 kehrt sich die Drehrichtung einer der Hydrostatik-Einheiten um. Von hier an bis zum Wert i = 1 ist die Leistungsaufteilung $N_h/N_D$ negativ ; dies bedeutet Blindleistung. Es wird dabei Leistung von der Abtriebswelle 38 entnommen und rückwärts über das stufenlose Getriebe G dem Planetengetriebe D wieder zugeführt. Somit ist die mechanische Leistung, die aus dem Planetengetriebe D fließt, größer als die Eingangsleistung $N_D$. Für den Gesamtwirkungsgrad hat dies nur einen untergeordneten Einfluß ; maßgebend ist die absolute Leistung, die durch das stufenlose Getriebe G fließt. Bei i = 1 herrscht Drehzahl-Gleichheit in den Schaltkupplungen 32 und 33. Diese können somit nunmehr ohne Synchronisierarbeit eingerückt werden, wobei gleichzeitig die Schaltkupplungen 31 und 34 gelöst werden. Die Motorleistung wird hierdurch über die Schaltkupplung 33 direkt auf die Abtriebswelle 30 übertragen. Die Schwungradleistung gelangt über die Schaltkupplung 32 in das Zwischengetriebeglied Z. Von hier wird sie teils über die Getriebteile 46, 45, 12, G, 43, 44, D und 33 und teils direkt über das Planetengetriebe D und die Schaltkupplung 33 auf die Abtriebswelle 30 übertragen. Die Leistungsaufteilung $N_h/N_D$ der Schwungradleistung allein steigt, wie aus Fig. 4 ersichtlich, hyperbolisch an. Dabei fließt die Leistung $N_h$ anfangs wieder rückwärts durch das Getriebe G, wobei sie mit größer werdender Übersetzung gegen Null geht. Anschließend wird das Getriebe G wieder in positiver Richtung durchflossen, bei wieder zunehmendem Leistungsanteil $N_h$. Bei welchem Wert $N_h/N_D$ der Umschaltpunkt liegt, kann durch das Verhältnis der Durchmesser von Sonnenrad 21 und Hohlrad 23 bestimmt werden. Bei den Anordnungen nach Fig. 1 und 2 ergeben sich im Anfahr-Betriebsbereich, abweichend von Fig. 4, steil abfallende hyperbelförmige Kennlinien und oberhalb von i = 1 linear aufsteigende Kennlinien.

Dabei liegt der Umschaltpunkt — aufgrund der unterschiedlichen Verknüpfungen des Planetengetriebes D mit den übrigen Getriebeteilen — bei negativen Werten von $N_h/N_D$, die im Falle der Fig. 1 größer und im Falle der Fig. 2 kleiner als 1/2 sind.

In Fig. 4 ist mit dem Maßpfeil B der Bereich kleiner hydraulischer Leistung gekennzeichnet, dieser kann z. B. als derjenige Bereich definiert werden, in dem der absolute Betrag von $N_h/N_D$ kleiner als 1/3 ist. Wie schon erwähnt, ist der durchschnittliche Wirkungsgrad des Antriebsaggregats um so höher je größer der Bereich B ist. Diesbezüglich werden mit der erfindungsgemäßen Bauweise günstigere Werte erzielt als mit dem bekannten Aggregat gemäß DE-A-28 10 086, weil bei diesem das Umschalten vom ersten in den zweiten Betriebsbereich stets bei $N_h/N_D = 0$ stattfindet.

In allen Ausführungen gemäß Fig. 1 bis 3 können noch andere Betriebszustände herbeigeführt werden : Wenn allein die Schaltkupplung 32 geschlossen ist, kann Antriebsenergie von der Antriebsmaschine M über die Getriebe D und G zum Schwungrad S (oder umgekehrt) übertragen werden. Eine Drehzahlerhöhung des Schwungrades S erfolgt jedoch vorzugsweise beim Bremsen des Fahrzeuges, also von der Abtriebswelle 30 her über die Getriebe G und D. Hierbei werden die Schaltkupplungen in gleicher Weise betätigt wie oben beschrieben in Zusammenhang mit den Fig. 3 und 4. Durch alleiniges Schließen der Schaltkupplung 34 kann Leistung von der Antriebsmaschine M allein über die Getriebe D und G zur Abtriebswelle fließen (Bergfahrt). Schließlich kann durch alleiniges Schließen der Schaltkupplung 33 Leistung von der Antriebsmaschine M direkt auf die Abtriebswelle übertragen werden (Überlandfahrt).

Das in Fig. 5 dargestellte Ausführungsbeispiel unterscheidet sich von den zuvor beschriebenen dadurch, daß drei Schaltkupplungen durch Schalteinheiten 31', 32', 34' ersetzt sind ; diese umfassen je ein Planetengetriebe und eine Bremse, die das Hohlrad stillsetzen kann. Das Schwungrad S' ist hier auf einer Hohlwelle befestigt, die mit den Sonnenrädern der beiden Schalteinheiten 31' und 32' verbunden ist. Die Anordnung des Planetengetriebes D und die Verknüpfung von dessen Getriebegliedern 21, 22, 23 ist gleich derjenigen von Fig. 3, desgleichen die Anordnung der Hydrostatik-Einheiten $G_1$ und $G_2$. Ebenso ist unverändert die Funktion der Kupplung 33 bzw. der Schalteinheit 34'. Lediglich deren Lage ist gegenüber der Fig. 3 verändert worden. Die Übersetzungen der Planetengetriebe der Schalteinheiten 31', 32', 34' können so gewählt werden, daß keine der beiden Hydrostatik-Einheiten reversibel (d. h. mit umkehrbarer Drehrichtung) ausgeführt werden muß und daß dennoch das Umschalten bei Synchrondrehzahlen stattfinden kann.

Abweichend von Fig. 5 könnte anstelle der Schalteinheit 34' eine einfache Schaltkupplung 34 belassen werden. Hierdurch würde zwar beim Umschalten von Getriebe her eine Veränderung der Motordrehzahl verursacht werden ; dies könnte aber in der Regel ohne Schwierigkeiten in Kauf genommen werden.

Bevorzugte Anwendungen :

Das erfindungsgemäße Antriebsaggregat kann vor allem in Fahrzeugen, vorzugsweise in Omnibussen für den Stadtverkehr benutzt werden. Denn solche Fahrzeuge müssen sehr oft abgebremst werden, wobei die Bremsenergie im Schwungrad gespeichert und anschließend wieder nutzbar gemacht werden kann.

## Patentansprüche

1. Antriebsaggregat, insbesondere für Fahrzeuge, mit einer Antriebsmaschine (M), einem Schwungrad (S), einem stufenlosen Getriebe (G), das einen ersten Getriebeanschluß (11) und einen zweiten Getriebeanschluß (12) aufweist, ferner mit einem Planetengetriebe (D), das drei Planetengetriebeglieder (23, 22, 21) hat, und mit einer Abtriebswelle (30), wobei die Antriebsmaschine (M) mit dem ersten Planetengetriebeglied (23) und der erste Getriebeanschluß (11) mit dem zweiten Planetengetriebeglied (21) verbunden ist, sowie mit mehreren Schaltkupplungen (31 bis 34), die derart angeordnet sind, daß das Schwungrad (S) einerseits an die Antriebsmaschine (M) andererseits an den zweiten Getriebeanschluß (12) kuppelbar ist, und daß die Abtriebswelle (30) einerseits an den zweiten Getriebeanschluß (12) andererseits an die Antriebsmaschine (M) kuppelbar ist, wobei in einem ersten Betriebsbereich (Anfahren) die Schaltkupplungen (31 bis 34) derart geschaltet sind, daß das Schwungrad (S) an die Antriebsmaschine (M) gekoppelt und vom zweiten Getriebeanschluß (12) gelöst ist, und daß die Antriebswelle (30) an den zweiten Getriebeanschluß (12) gekoppelt und von der Antriebsmaschine (M) gelöst ist ; gekennzeichnet durch die folgenden Merkmale :

a. der zweite Getriebeanschluß (12) ist dauernd mit dem dritten Planetengetriebeglied (22) verbunden ;

b. in einem zweiten Betriebsbereich sind die Schaltkupplungen (31 bis 34) derart geschaltet, daß das Schwungrad (S) an den zweiten Getriebeanschluß (12) gekoppelt und von der Antriebsmaschine (M) gelöst ist, und daß die Abtriebswelle (30) an die Antriebsmaschine (M) gekoppelt und von dem zweiten Getriebeanschluß (12) gelöst ist (Figuren 3 bis 5).

2. Antriebsaggregat, insbesondere für Fahrzeuge, mit einer Antriebsmaschine (M), einem Schwungrad (S), einem stufenlosen Getriebe (G), das einen ersten Getriebeanschluß (11) und einen zweiten Getriebeanschluß (12) aufweist, ferner mit einem Planetengetriebe (D), das ein Hohlrad (23), einen Planetenträger (22) und ein Sonnenrad (21) hat, und mit einer Abtriebswelle (30), wobei die Antriebsmaschine (M) mit dem Sonnenrad (21) oder dem Hohlrad (23) und der erste Getriebeanschluß (11) mit dem Hohlrad (23) oder dem Sonnenrad (21) verbunden ist, sowie mit mehreren Schaltkupplungen, die derart angeordnet sind, daß das Schwungrad (S) an die Antriebsmaschine (M) sowie die Abtriebswelle (30) an den zweiten Getriebeanschluß (12) und an die Antriebsmaschine (M) kuppelbar ist, wobei in einem ersten Betriebsbereich (Anfahren) die Schaltkupplungen derart geschaltet sind, daß das Schwungrad (S) an die Antriebsmaschine (M) gekoppelt und die Antriebswelle (30) von der Antriebsmaschine (M) gelöst ist ; gekennzeichnet durch die folgenden Merkmale :

a. der zweite Getriebeanschluß (12) ist dauernd mit der Antriebsmaschine (M) verbunden ;

b. im ersten Betriebsbereich (Anfahren) ist die Abtriebswelle (30) an den Planetenträger (22) gekoppelt (Schaltkupplung 34) ;

c. in einem zweiten Betriebsbereich sind die Schaltkupplungen (31 bis 34) derart geschaltet, daß das Schwungrad (S) an den Planetenträger (22) gekoppelt und von der Antriebsmaschine (M) gelöst ist, und daß die Abtriebswelle (30) an die Antriebsmaschine (M) gekoppelt und vom Planetenträger (22) gelöst ist (Figuren 1 oder 2).

3. Antriebsaggregat nach Anspruch 1, dadurch gekennzeichnet, daß von dem Planetengetriebe (D) das Hohlrad (23) dauernd mit der Antriebsmaschine (M), der Planetenträger (22) dauernd mit dem zweiten Getriebeanschluß (12) und das Sonnenrad (21) dauernd mit dem ersten Getriebeanschluß (11) verbunden ist (Figuren 3 bis 5).

4. Antriebsaggregat nach einem der Ansprüche 1 bis 3, dadurch gekennzeichnet, daß zwischen dem Schwungrad (S) und der Antriebsmaschine (M) sowie zwischen dem Schwungrad (S) und dem Planetenträger (22) je ein Übersetzungsgetriebe (Planetenradsätze 31', 32') vorgesehen sind, und daß die Übersetzungen der beiden Übersetzungsgetriebe derart unterschiedlich gewählt sind, daß der erste Getriebeanschluß (11) des stufenlosen Getriebes (G) in allen Betriebszuständen die gleiche Drehrichtung aufweist.

## Claims

1. Drive assembly, especially for motor vehicles, comprising a prime mover (M), a flywheel (S) and a continuously variable transmission (G) which has a first connection (11) and a second connection (12) further comprising a driven shaft (30) and a planetary transmission (D) having three planetary transmission components (23, 22, 21), with the prime mover (M) being connected to the first planetary transmission component (23) and the first connection (11) being connected to the second planetary transmission component (21), further comprising various clutches (31 to 34) being arranged in such a way, that the flywheel (S) is connectable to the prime mover (M) on the one hand and to the second connection (12) on the other hand, and that the driven shaft (30) is connectable to the second connection (12) on the one hand and to the prime mover (M) on the other hand, the clutches (31 to 34) being operated in a first operating range (start-up) in such a way, that the flywheel (S) is connected to the prime mover (M) and disconnected from the second connection (12), and that the driven shaft (30) is connected to the second connection (12) and disconnected from the prime mover (M) ; characterized by the following features :

a. the second connection (12) is continuously connected to the third planetary transmission component (22) ;

b. in a second operating range the clutches (31 to 34) are operated in such a way, that the flywheel (S) is connected to the second connection (12) and disconnected from the prime mover (M), and that the driven shaft (30) is connected to the prime mover (M) and disconnected from the second connection (12) (figures 3 to 5).

2. Drive assembly, especially for motor vehicles, comprising a prime mover (M), a flywheel (S), a continuously variable transmission (G) which has a first connection (11) and a second connection (12), further comprising a driven shaft (30) and a planetary transmission (D) having an internal geared wheel (23), a planet carrier (22) and a sun wheel (21), with the prime mover (M) being connected to the sun wheel (21) or to the internal geared wheel (23) and the first connection (11) being connected to the internal geared wheel (23) or to the sun wheel (21), further comprising various clutches being arranged in such a way, that the flywheel (S) is connectable to the prime mover (M) and that the driven shaft (30) is connectable to the second connection (12) and to the prime mover (M), the clutches being operated in a first operating range (start-up) in such a way, that the flywheel (S) is connected to the prime mover (M) and that the driven shaft (30) is disconnected from the prime mover (M) ; characterized by the following features :

a. the second connection (12) is continuously connected to the prime mover (M) ;

b. in the first operating range (start-up) the driven shaft (30) is connected (clutch 34) to the planet carrier (22) ;

c. in a second operating range the clutches (31 to 34) are operated in such a way, that the flywheel (S) is connected to the planet carrier (22) and is disconnected from the prime mover, and that the driven shaft (30) is connected to the prime mover (M) and disconnected from the planet carrier (22) (figures 1 or 2).

3. Drive assembly according to claim 1, characterized in that, with respect to the planetary transmission (D) the internal geared wheel (23) being continuously connected to the prime mover (M), the planet carrier (22) being continuously connected to the second connection (12) and the sun wheel (21) being continuously connected to the first connection (11) (figures 3 to 5).

4. Drive assembly according to one of the claims 1 to 3, characterized in that between the flywheel (S) and the prime mover (M) and also between the flywheel (S) and the planet carrier (22) one geared transmission (planetary gear sets 31', 32') each is provided, and that the ratios of the two geared transmissions are differently selected in such a way, that the first connection (11) of the continuously variable transmission has the same sense of rotation in all operating conditions.

**Revendications**

1. Dispositif formant un ensemble de commande, en particulier pour véhicules, pourvu d'une machine motrice (M), d'un volant (S), d'un entraînement continu (G) qui présente un relais d'engrenages (11) et un deuxième relais d'engrenages (12), d'un engrenage planétaire (d) qui a trois chaînons d'engrenages (23, 22, 21) et d'un arbre de sortie (30) où la machine motrice (M) est liée par le premier chaînon d'engrenage planétaire (23) et le premier relais d'engrenages (11) est lié au deuxième chaînon d'engrenages (21), ainsi que de plusieurs accouplements de mise en marche (31 à 34) qui sont disposés de telle sorte que le volant (S) puisse être couplé d'une part à la machine motrice (M) et d'autre part au deuxième relais d'engrenages (12) et que l'arbre de sortie (30) puisse être couplé d'une part au deuxième relais d'engrenages (12) et d'autre part à la machine motrice (M), ensemble de commande dans lequel, dans une première zone de fonctionnement (démarrage), les accouplements de mise en marche (31 à 34) sont couplés de telle sorte que le volant (S) soit couplé à la machine motrice (M) et détaché du deuxième relais d'engrenages (12) et que l'arbre de sortie (30) soit couplé au deuxième relais d'engrenages (12) et détaché de la machine motrice (M), caractérisé :

en ce que le deuxième relais d'engrenages (12) est fixé au troisième chaînon d'engrenage planétaire (22), et

en ce que, dans une deuxième zone de fonctionnement, les accouplements de mise en marche (31 à 34) sont couplés de telle sorte que le volant (S) soit couplé au deuxième relais d'engrenages (12) et détaché de la machine motrice (M) et que l'arbre de sortie (30) soit couplé à la machine motrice (M) et détaché au deuxième relais d'engrenages (12) (fig. 3 à 5) ;

2. Ensemble de commande, en particulier pour véhicules, pourvu d'une machine motrice (M), d'un volant (S), d'un entraînement continu (G) qui présente un premier relais d'engrenages (12), d'un engrenage planétaire (D), qui a une roue à denture intérieure (23), un porte-satellites (22) et une roue solaire (21), d'un arbre de sortie (30) où la machine motrice (M) est liée à la roue solaire (21) ou à la roue à denture intérieure, et le premier relais d'engrenages à la roue à denture intérieure (23) ou à la roue solaire (21), ainsi que de plusieurs accouplements de mise en marche disposés de telle sorte que le volant (S) puisse être couplé à la machine motrice (M) et l'arbre de sortie (30) au deuxième relais d'engrenages (12) et à la machine motrice (M), ensemble de commande dans lequel dans la première zone de fonctionnement (démarrage), les accouplements de mise en marche sont couplés de telle sorte que le volant (S) soit couplé à la machine motrice (M) et l'arbre de sortie (30) soit détaché de la machine motrice caractérisé :

en ce que le deuxième relais d'engrenages 12 est fixé à la machine motrice (M),

en ce que, dans la première zone de fonctionnement l'arbre de sortie (30) est couplé au châssis (22) (coupleur de mise en marche 34), et

en ce que dans la deuxième zone de fonctionnement, les accouplements de mise en marche (31) à (34) sont couplés de telle sorte que le volant (S) soit couplé au porte-satellites (22) et détaché de la machine motrice (M) et que l'arbre de sortie (30) soit couplé à la machine motrice (M) et détaché du porte-satellites (22) (fig. 1 ou 2) ;

3. Ensemble de commande selon la revendication 1, caractérisé : en ce que l'engrenage planétaire (D) la roue à denture intérieure (23) est fixée à la machine motrice (M), le porte-satellites (22) au deuxième relais d'engrenages (12) et la roue solaire au premier relais d'engrenages (11) (fig. 3 à 5) ;

4. Ensemble de commande selon les revendications 1 à 3, caractérisé : en ce que, entre le volant (S) et la machine motrice (M) ainsi qu'entre le volant (S) et le porte-satellites (22), un engrenage de transmission (train de roues planétaires 31', 32') est prévu et que les rapports des deux engrenages de transmission sont choisis différemment de telle sorte que le premier relais d'engrenages (11) de l'entraînement continu (G) présente à tous les stades de marche le même sens de rotation.

Fig. 1

Fig. 2

Fig. 3

Fig. 4

Fig. 5

2